# EUROPÄISCHE PATENTSCHRIFT

(11) **EP 1 962 129 B1**
(45) Veröffentlichungstag und Bekanntmachung des Hinweises auf die Patenterteilung: **05.08.2009**
(21) Anmeldenummer: 08151451.5
(22) Anmeldetag: 14.02.2008
(51) Int. Cl.: G02F 1/1333, G02F 1/1345, G02F 1/1343

(54) **Passiv-Matrix Flüssigkristall-Anzeigeelement und aus einer Vielzahl solcher Elemente zusammengesetzte Flüssigkristall-Anzeigetafel**
Passive-matrix LCD element and tiled LCD panel with a plurality of such elements
Elément d'affichage à cristal liquide et à matrice passive, et tableau d'affichage à cristal liquide comportent plusieurs de tels éléments

(30) Priorität: 26.02.2007 DE 202007002770 U
(43) Veröffentlichungstag der Anmeldung: 27.08.2008
(73) Patentinhaber: AEG Gesellschaft für moderne Informationssysteme mbH, 89077 Ulm (DE)
(72) Erfinder: Bayrle, Reiner, 89129 Langenau (DE); Bitter, Thomas, 73342 Bad Ditzenbach (DE); Bader, Otto, 88447 Warthausen (DE); Simon, Arnold, 89231 Neu Ulm (DE)
(74) Vertreter: Winter, Brandl, Fürniss, Hübner Röss, Kaiser, Polte Partnerschaft Patent- und Rechtsanwaltskanzlei

(56) Entgegenhaltungen:
- US-A1- 2002 109 658
- US-A1- 2002 163 614
- US-A1- 2003 095 224

## Beschreibung

Die vorliegende Erfindung betrifft ein LCD-Anzeigeelement nach dem Oberbegriff des Anspruchs 1 und eine LCD-Anzeigetafel mit einer Mehrzahl solcher LCD-Anzeigeelemente nach Anspruch 21.

Derartige LCD-Anzeigeelemente umfassen einen Flüssigkristall, der zwischen zwei optisch durchlässigen Abdeckscheiben mittels eines Kleberandes eingeschlossen ist. Auf der Innenseite der beiden Abdeckscheiben ist eine Elektrodenanordnung in Matrixform mit Zeilen und Spaltenelektroden angeordnet, die in der Regel streifenförmig sind. Die streifenförmigen Zeilenelektroden sind durch Trennungsbereiche voneinander getrennt und die streifenförmigen Spaltenelektroden sind durch Abstandsbereichen voneinander getrennt. Die Überkreuzungsbereiche zwischen Zeilen- und Spaltenelektroden legen mit dem Flüssigkristall dazwischen die einzelnen Pixel des LCD-Anzeigeelements fest.

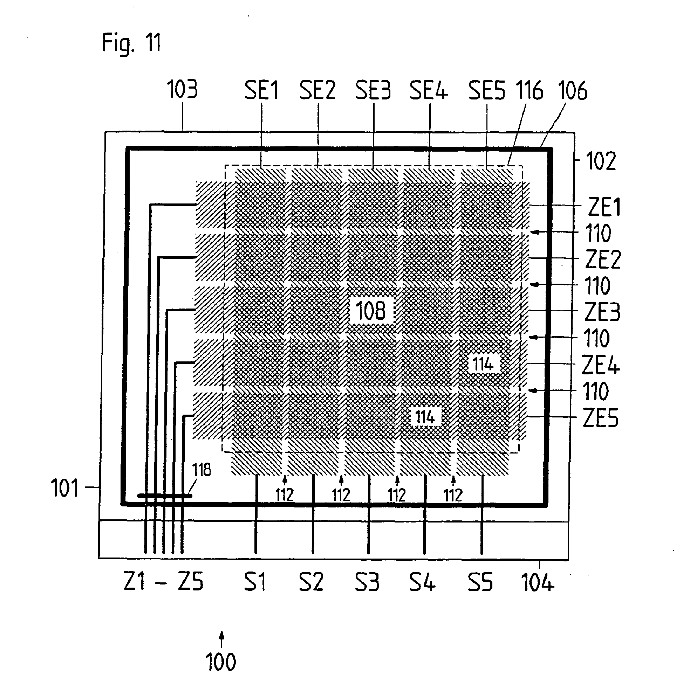

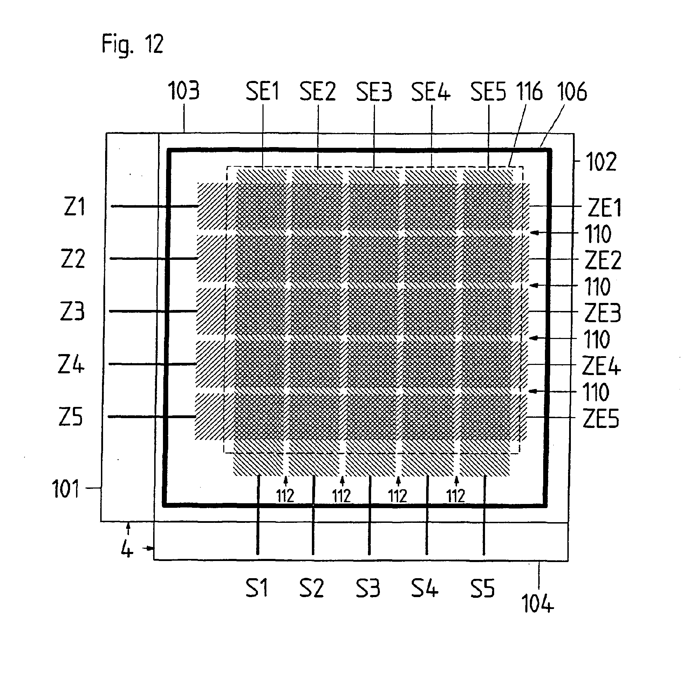

Figuren 11 und 12 zeigen schematisch zwei Varianten einer derartigen Pixelmatrixanordnung nach dem Stand der Technik. Ein der Fig. 11 entsprechendes Matrix-LCD-Anzeigeelement ist aus der US-A-5,313,293 bekannt. Das LCD-Anzeigeelement 100 ist rechteckig mit einer linken Seitenkante 101, einer rechten Seitenkante 102, einer oberen Seitenkante 103 und einer unteren Seitenkante 104. Das Bezugszeichen 106 bezeichnet den Kleberand, der die beiden optisch durchlässigen Abdeckscheiben miteinender verbindet und den Flüssigkristall einschließt. Innerhalb des Kleberands 106 ist eine matrixförmige Elektrodenanordnung 108 vorgesehen, die fünf streifenförmige, rechteckige Zeilenelektroden ZE1 bis ZE5 aufweist, die parallel übereinander angeordnet. Zwischen den einzelnen Zeilenelektroden ZE1 bis ZE5 ist jeweils ein streifenförmiger Trennungsbereich 110 vorgesehen, der die in einer Ebene auf der Innenseite einer der beiden Abdeckscheiben angeordneten Zeilenelektroden ZE elektrisch voneinander isoliert. Senkrecht hierzu sind ebenfalls fünf streifenförmige, rechteckige Spaltenelektroden SE1 bis SE5 vorgesehen, die auf der Innenseite der anderen der beiden Abdeckscheiben in einer Ebene angeordnet sind. Zwischen den Spaltenelektroden SE sind jeweils streifenförmige Abstandsbereiche 112 vorgesehen, die die Spaltenelektroden SE elektrisch voneinander isolieren. Die Überkreuzungsbereiche zwischen Zeilen- und Spaltenelektroden ZE und SE definieren mit dem Flüssigkristall dazwischen die einzelnen Pixel 114 des LCD-Anzeigeelements. Der Bereich dieser Pixel 114 legt einen Sichtfeld 116 fest, in dem die Informationen optisch angezeigt werden können. Die Ansteuerung der Zeilen- bzw. Spaltenelektroden ZE bzw. SE erfolgt über Zeilenzuleitungen Z1 bis Z5 bzw. über Spaltenzuleitungen S1 bis S5. Sowohl die Zeilenzuleitungen Z1 bis Z5 als auch die Spaltenzuleitungen S1 bis S5 kontaktieren die streifenförmigen Zeilenelektroden ZE bzw. Spaltenelektroden SE an einem ihrer Enden. Die Zeilenzuleitungen Z1 bis Z5 kontaktieren die Zeilenelektroden ZE1 bis ZE5 an deren Ende, die im Bereich der linken Seitenkante 101 liegen. Die Spaltenzuleitungen S1 bis S5 kontaktieren die Spaltenelektroden SE1 bis SE5 im Bereich der unteren Seitenkante 104. Die Spaltenzuleitungen S1 bis S5 werden im Bereich der unteren Seitenkante 104 durch den Kleberand 106 geführt.

Bei der Variante nach der Fig. 11 werden die Zeilenzuleitungen Z1 bis Z5 innerhalb des Kleberands nach unten in Richtung der unteren Seitenkante 104 zu einem Kontaktstreifen 118 geführt. Im Bereich des Kontaktstreifens 118 werden die Zeilenzuleitungen Z von der Innenseite der oberen Abdeckscheibe zu der Innenseite der unteren Abdeckscheibe geführt und durchsetzen dort ebenfalls den Kleberand 106. Bei der Variante nach Fig. 12 werden die Zeilenzuleitungen im Bereich der linken Seitenkante 101 durch den Kleberand 106 geführt und verbleiben auf der Innenseite der oberen Abdeckscheibe. Aus der US-A-2001/0022640 ist es bekannt mittels elektrisch leitenden Teilchen im Kleberand eine elektrisch leitende Verbindung zwischen den Elektroden auf der Innenseite der oberen und der unteren Abdeckscheibe herzustellen.

Aufgrund dieser Führung der Zuleitungen ergibt sich bei diesen beiden bekannten LCD-Anzeigeelementen im Bereich der linken und unteren Seitenkante 101, 104 ein vergleichsweise breiter, optisch nicht nutzbarer Randstreifen. Werden mehrere derartige LCD-Anzeigeelemente nebeneinander angeordnet, so können die LCD-Elemente nur an den Seitenkanten auf Stoß nebeneinander angeordnet werden, an denen keine Zeilen- bzw. Spaltenzuleitungen durch den Kleberand 106 geführt sind. D. h. bei dem bekannten LCD-Anzeigelement nach Fig. 12 können nur vier LCD-Elemente ohne störende Randstreifen neben- und übereinander angeordnet werden. Bei der Variante nach Fig. 11 ergeben sich bei einer zeilenförmigen NebeneinanderAnordnung aéuf Stoß durch den verbreiterten Bereich zwischen linker Seitenkante 101 und Sichtfeld 116 ebenfalls deutlich sichtbare Randstreifen, was zu einem ungleichförmigen Anzeige- bzw. Sichtfeld führt.

Ein LCD-Anzeigeelement gemäß der Präambel des Anspruchs 1 ist aus der US 2002/0163614 A1 bekannt. Dieses weist ebenfalls eine seitliche Führung der Zuleitungen auf.

Es ist daher Aufgabe der vorliegenden Erfindung ein LCD-Anzeigeelement anzugeben, das zu einer gleichförmigen LCD-Anzeigetafel durch NebeneinanderAnordnung von einzelner LCD-Anzeigeelemente zusammengesetzt werden kann. Weiter ist es Aufgabe eine derartige LCD-Anzeigetafel anzugeben.

Aus der US 2002/0109658 A1 ist ein Aktiv-Matrix LCD-Anzeigeelement bekannt, bei dem die Signalleitungen zwischen benachbarten Abtastleitungen geführt werden.

Die erfindungsgemäße Lösung dieser Aufgabe erfolgt durch die Merkmale des Anspruchs 1 bzw. 21.

Dadurch, dass Zeilenzuleitungen die Zeilenelektroden nicht an einem ihrer Enden kontaktieren, sondern in den Abstandsbereichen zwischen den einzelnen Spaltenelektroden geführt sind und die elektrischen Kontaktpunkte in den Abstandsbereichen angeordnet sind, wird es möglich den Randbereich außerhalb des Sichtfeldes im Bereich der linken und der rechten Seitenkante gleich schmal zu gestalten. Der breite Seitenrand im Bereich der Kontaktstellen der Zeilenelektroden nach dem Stand der Technik wird vermieden. Dadurch, dass die Zeilenzuleitungen auf der Innenseite der ersten Abdeckscheibe geführt sind, ist im Bereich der Durchführung durch den Kleberand kein Kontaktstreifen wie beim Stand der Technik nach Fig. 11 notwendig. Dadurch, dass Verbindungsabschnitte schmaler sind als die Pixelabschnitte, wird verhindert, dass die in den Abstandsbereichen zwischen den Spaltenelektroden verlaufenden Zeilenzuleitungen zu optisch merklichen Ansteuerungen im Bereich der Überkreuzungen zwischen nicht-kontaktierten Zeilenelektroden und der Zeilenzuleitung führen.

Für den Fall, dass die Zahl z der Zeilenelektroden kleiner ist als die Zahl s der Spaltenelektroden ist nach Anspruch 2 höchstens eine Zeilenzuleitung zwischen zwei Spaltenelektroden geführt. Für den Fall, das die Zahl z der Zeilenelektroden größer oder gleich der Zahl s der Spaltenelektroden ist, ist nach Anspruch 3 zwischen allen Spaltenelektroden wenigstens eine Zeilenzuleitung geführt. In beiden Fällen wird erreicht, dass die Abstandsbereiche möglichst schmal ausgeführt werden können.

Gemäß der vorteilhaften Ausgestaltung der Erfindung nach Anspruch 4 werden sowohl die Zeilen als auch die Spaltenzuleitungen an einer gemeinsamen geraden LCD-Kante bzw. Seitenkante durch den Kleberand nach außen geführt. Hierdurch können die LCD-Elemente an den verbleibenden Seitenkanten nebeneinander zu einer LCD-Anzeigetafel angeordnet werden.

Gemäß der vorteilhaften Ausgestaltung der Erfindung nach Anspruch 5 verbinden die Verbindungsabschnitte die Pixelabschnitte abwechselnd an deren oberen und unteren Rändern elektrisch miteinander. Dadurch kann die Anzahl der Kleberpunkte reduziert werden

Je nach Anwendungsbereich können verschiedene Formen für die streifenförmigen Elektroden bzw. für die sich daraus ergebenden einzelnen Pixel gewählt werden. Gerundete Formen - Anspruch 9 - bzw. gefaste Ecken - Anspruch 8 - sind besonders bevorzug, da dann mehr Platz für die elektrischen Kontaktpunkte und die Kleberpunkte bleibt.

Durch die vorteilhafte Ausgestaltung der Erfindung nach Anspruch 10 ergibt sich eine Flüssigkristall-Zelle bzw. eine LCD-Anzeigeelement mit einem konstanten Abstand der beiden Abdeckscheiben, da die beiden Abdeckscheiben nicht nur im Bereich des Kleberands, sondern auch im Bereich der Klebepunkte miteinander verbunden sind.

Vorzugsweise sind nach Anspruch 11 die Kleberpunkte so groß ausgestaltet, dass auch die Zeilenelektrode im Abstandsbereich durch den Kleberpunkt abgedeckt wird. Hierdurch wird eine eventuelle Ansteuerung der Zeilenelektrode in diesem Bereich durch die überkreuzende Zeilenzuleitung unsichtbar.

Durch die vorteilhafte Ausgestaltung der Erfindung nach Anspruch 12 bzw. 14 ergibt sich ein gleichförmiger optischer Eindruck.

Durch die vorteilhafte Ausgestaltung der Erfindung nach Anspruch 13 können Kleberrand und Kleberpunkte in einem Arbeitsgang auf eine der Abdeckscheiben aufgebracht werden. Die Kleberpunkte und/oder die elektrischen Kontaktpunkte können auch mit dem Kleberand verfliesen.

Durch die vorteilhafte Ausgestaltung der Erfindung nach Anspruch 15 oder 16 vereinfacht sich die Herstellung der elektrischen Kontaktpunkte.

Durch die vorteilhafte Ausgestaltung der Erfindung nach Anspruch 17 wird auf einfache Weise ein elektrischer Leiter bereitgestellt, der nur in einer Richtung, nämlich in senkrechter Richtung zu der ersten und zweiten Ebene elektrisch leitend ist, nicht jedoch in Querrichtung hierzu, d. h. in Richtung parallel zu der ersten und zweiten Ebene. Hierdurch wird es möglich die elektrischen Kontaktpunkte vergleichsweise groß auszubilden, da ein Kurzschluss zwischen zwei benachbarten Zeilenelektroden aufgrund der fehlenden elektrischen Leitfähigkeit in Querrichtung nicht möglich ist. Da der mittlere Durchmesser der leitfähigen Partikel etwas größer ist als der Abstand der beiden Abdeckscheiben werden die leitfähigen Partikel zwischen den beiden Abdeckscheiben eingeklemmt, so dass sich ein guter elektrischer Kontakt zu der jeweiligen Zeilenelektrode und der zugehörigen Zeilenzuleitung ergibt. Es liegt also eine einlagige Schicht aus leitfähigen Partikeln vor, Da die elektrisch leitfähigen Partikel mit Abstand zueinander angeordnet sind, sind die elektrischen Kontaktpunkte in Querrichtung bzw. in Richtung parallel zu der ersten und zweiten Ebene nicht elektrisch leitend. Diese gewünschte Anordnung der leitfähigen Partikel wird durch eine entsprechende Konzentration und durch entsprechende statistische Verteilung der leitfähigen Partikel in dem Klebermaterial der elektrischen Kontaktpunkte oder auf der Flüssigkristall-Orientierungsschicht im Bereich der elektrischen Kontaktpunkte erzielt.

Die in Anspruch 18 genannten Werte ergeben zufriedenstellende optische Eindrücke des LCD-Anzeigelements.

Wenn die LCD-Elemente rechteckig ausgebildet sind, können diese an drei Seiten auf Stoß aneinander gefügt werden, wobei der Randbereich mit dem Kleberand minimal ausgeführt werden kann.

Die übrigen Unteransprüche beziehen sich auf weitere vorteilhafte Ausgestaltungen der Erfindung.

Es sei auch noch darauf hingewiesen, dass natürlich Zeilen und Spalten vertauscht werden können. Auch ist es beliebig an welcher Seite die Spaltenzuleitungen die Spaltenelektroden kontaktieren.

Weitere Einzelheiten, Merkmale und Vorteile der Erfindung ergeben sich aus der nachfolgenden Beschreibung einer bevorzugten Ausführungsform anhand der Zeichnung.

Es zeigt:
Fig. 1 eine schematische Darstellung einer beispielhaften Ausführungsform der Erfindung;
Fig. 2 das Layout der Zeilenelektroden der Ausführungsform nach Fig. 1;
Fig. 3 eine Schnittdarstellung der Ausführungsform nach Fig. 1 entlang der Linie A - A;
Fig. 4 eine Schnittdarstellung der Ausführungsform nach Fig. 1 entlang der Linie B - B;
Fig. 5 eine Schnittdarstellung der Ausführungsform nach Fig. 1 entlang der Linie C - C;
Fig. 6a, 6b, 6c und 6d verschiedene Darstellungen einer beispielhaften maßstabsgetreuen Ausgestaltung eines elektrischen Kontaktpunkts;
Fig. 7a und 7b eine beispielhafte maßstabsgetreue Ausgestaltung eines Kleberpunktes;
Fig. 8a und 8b eine beispielhafte maßstabsgetreue Ausgestaltung eines Kleberpunktes mit im Abstandsbereich verlaufender Zeilenzuleitung;
Fig. 9a und 9b eine schematische Darstellung einer Anzeigetafel mit einer Mehrzahl von LCD-Anzeigeelementen, die auf Stoß neben- und übereinander angeordnet sind;
Fig. 10a und 10b eine schematische Darstellung einer Anzeigetafel mit einer Mehrzahl von LCD-Anzeigeelementen, die nach Art von Schindeln nebeneinander und teilweise übereinander angeordnet sind.
Fig. 11 eine LCD-Anzeigeelement nach dem Stand der Technik; und
Fig. 12 eine weiteres LCD-Anzeigeelement nach dem Stand der Technik.

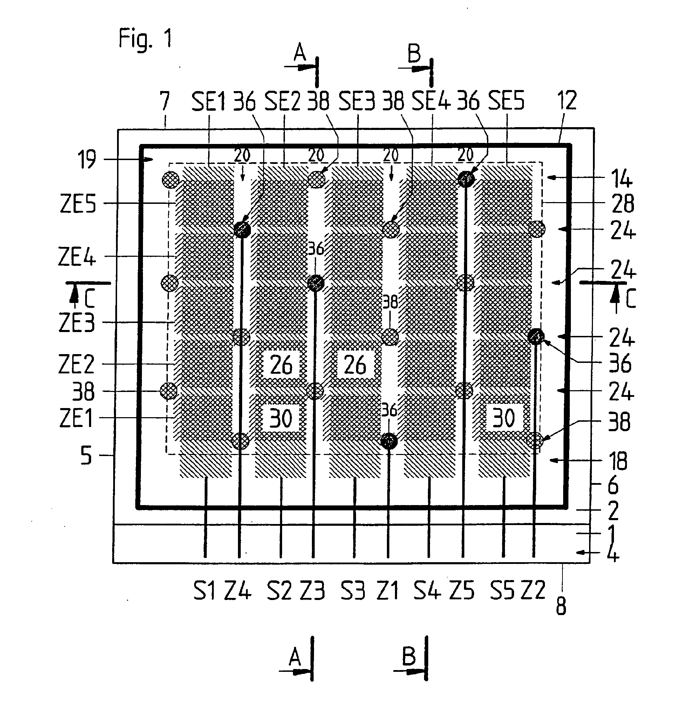

Die Figuren 1 bis 5 zeigen schematische Darstellungen einer beispielhaften Ausführungsform der Erfindung. Fig. 1 zeigt ein rechteckiges LCD-Anzeigeelement mit einer ersten, optisch durchsichtigen Abdeckscheibe 1 und einer zweiten optisch durchlässigen Abdeckscheibe 2. Die beiden Abdeckscheiben 1 und 2 sind gleich breit und die erste Abdeckscheibe ist etwas länger, wodurch sich ein Kontaktrand 4 ergibt. Die Kanten der beiden Abdeckscheiben 1 und 2 legen eine linke Seitenkante 5, eine rechten Seitenkante 6, eine oberen Seitenkante 7 und einer unteren Seitenkante 8 fest. Zwischen den beiden Abdeckscheiben 1 und 2 ist eine Flüssigkristall 10 angeordnet. Durch einen Kleberand 12 werden die beiden optisch durchlässigen Abdeckscheiben 1 und 2 mit Abstand zueinander miteinander verbunden. Der Flüssigkristall 10 wird durch die beiden Abdeckscheiben 1 und 2 und den Kleberand 12 eingeschlossen.

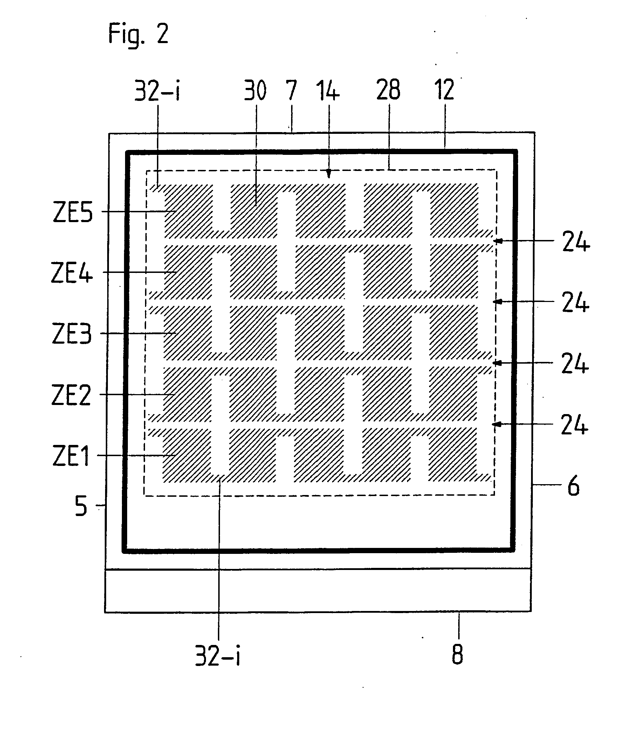

Innerhalb des Kleberands 12 ist eine matrixförmige Elektrodenanordnung 14 vorgesehen, die fünf streifenförmige Zeilenelektroden ZE1 bis ZE5 und fünf streifenförmige, rechteckige Spaltenelektroden SE1 bis SE5 aufweist. Die Spaltenelektroden SE sind in einer ersten Ebene 16 auf der Innenseite der ersten Abdeckscheibe 1 angeordnet und weisen ein erstes Elektrodenende 18 und ein zweites Elektrodenende 19 auf. Zwischen den einzelnen Spaltenelektroden SE sind Abstandsbereiche 20 vorgesehen, die die Spaltenelektroden SE elektrisch voneinander isolieren. Die Zeilenelektroden ZE sind in einer zweiten Ebene 22 auf der Innenseite der zweiten Abdeckscheibe 2 angeordnet. Die einzelnen Zeilenelektroden ZE werden durch Trennungsbereiche 24 voneinander elektrisch isoliert. Die Überkreuzungsbereiche zwischen Zeilen- und Spaltenelektroden ZE und SE definieren mit dem Flüssigkristall 10 dazwischen die einzelnen Pixel 26 des LCD-Anzeigeelements. Der Bereich dieser Pixel 26 legt einen Sichtbereich 28 fest, in dem Informationen optisch angezeigt werden können. Wie aus Fig. 2 zu ersehen ist, sind die einzelnen Zeilenelektroden ZE im Abstandsbereich wesentlich schmaler als im Überkreuzungs- bzw. Pixelbereich. Im wesentlichen bestehen die einzelnen Zeilenelektroden ZE aus einer Mehrzahl von Pixelabschnitten 30, die die Form der einzelnen Pixel 26 festlegen, die über Verbindungsabschnitte 32 elektrisch miteinander verbunden sind. Dabei verbinden die Verbindungsabschnitte 32 abwechselnd den oberen und den unteren Rand der Pixelabschnitte 30. Ebenfalls auf der Innenseite der ersten bzw. zweiten Abdeckscheibe ist über den Zeilen- bzw. Spaltanelektroden ZE, SE eine LCD-Orientierungsschicht 34 angeordnet.

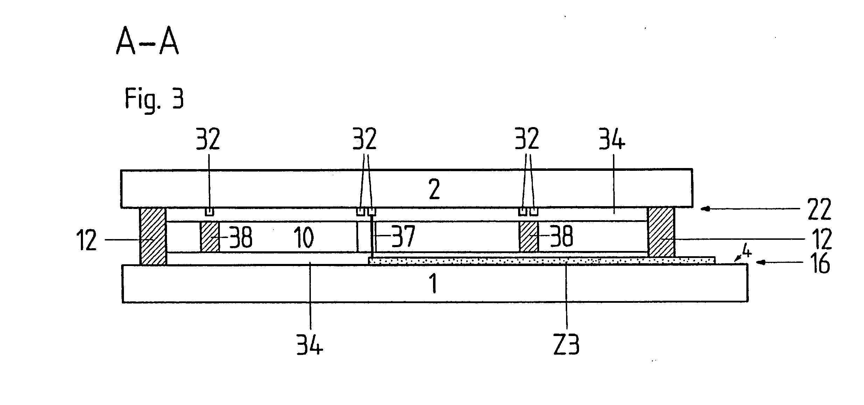

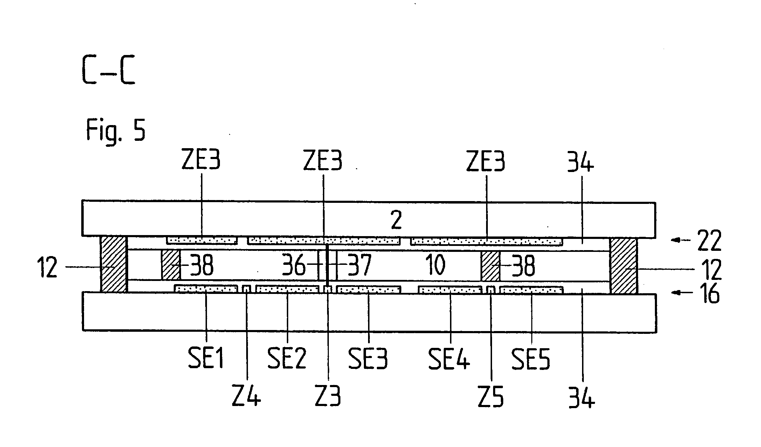

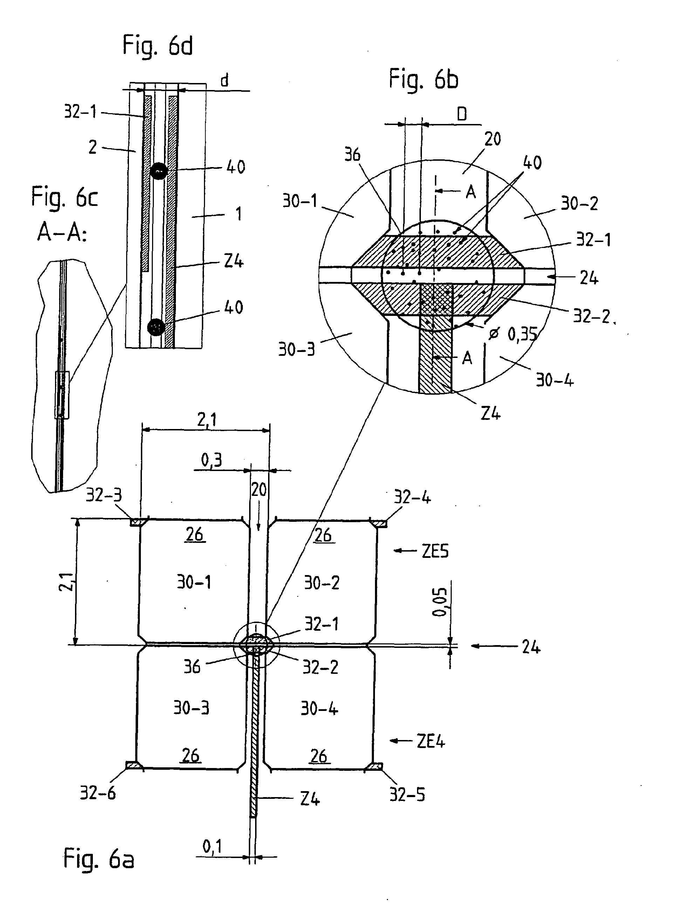

Die Ansteuerung der Zeilen- bzw. Spaltenelektroden ZE bzw. SE erfolgt über Zeilenzuleitungen Z1 bis Z5 bzw. über Spaltenzuleitungen S1 bis S5. Sowohl die Zeilenzuleitungen Z1 bis Z5 als auch die Spaltenzuleitungen S1 bis S5 sind in der ersten Ebene 16 auf der Innenseite der ersten Abdeckscheibe 1 angeordnet. Die Spaltenzuleitungen SE kontaktieren die Spaltenelektroden SE jeweils an deren erstem Elektrodenende 18. Die Spaltenzuleitungen S1 bis S5 werden im Bereich der unteren Seitenkante 8 durch den Kleberand 12 zu dem Kontaktrand 4 aus der Flüssigkristallzelle heraus geführt. Die Zeilenzuleitungen Z1, Z3 bis Z5 werden zwischen den Spaltenelektroden SE in den Abstandsbereichen 20 geführt. Die Zeilenzuleitung Z2 zur zweiten Zeilenelektrode ZE2 wird im Bereich zwischen fünfter Spaltenelektrode SE5 und dem Kleberand 12 nahe der rechten Seitenkante 6 geführt. Alternativ kann die zweite Zeilenzuleitung Z2 auch unter dem Kleberand 12 geführt werden. Die einzelnen Zeilenzuleitungen Z1 bis Z5 erstrecken sich in der ersten Ebene 16 jeweils bis unter den Verbindungsabschnitt 32 der zu kontaktierenden Zeilenelektrode ZE und enden jeweils in einem elektrischen Kontaktpunkt 36, der den Flüssigkristall 10 von der ersten Ebene 16 zu der zweiten Ebene 22 verdrängt und in der zweiten Ebene 22 den jeweiligen Verbindungsabschnitt 32 der zu kontaktierenden Zeilenelektrode ZE mit der zugehörigen Zeilenzuleitung elektrisch verbindet, wie dies aus Fig. 3 zu ersehen ist. Es ist zu beachten, dass die elektrischen Kontaktpunkte 36 nur in Richtung senkrecht zu den Abdeckscheiben 1, 2 elektrisch leitend sind, nicht jedoch in Querrichtung hierzu. Dies ist in Fig. 3 und Fig. 5 durch senkrechten Striche 37 angedeutet. Wie diese elektrische Leitfähigkeit in nur eine Richtung erreicht wird, wird weiter unten anhand der Fig. 6d erklärt.

Wie aus Fig. 1 zu ersehen ist, ist die erste Zeilenzuleitung Z1 zur Ansteuerung der ersten Zeilenelektrode ZE1 zwischen der dritten und der vierten Spaltenelektrode SE3, SE4 angeordnet. Die dritte Zeilenzuleitung Z3 zur Ansteuerung der dritten Zeilenelektrode ZE3 ist im Bereich zwischen der zweiten und der dritten Spaltenelektrode SE3, SE5 angeordnet. Die vierte Zeilenzuleitung Z4 zur Ansteuerung der vierten Zeilenelektrode ZE4 ist im Bereich zwischen der ersten und der zweiten Spaltenelektrode SE1, SE2 angeordnet. Die fünfte Zeilenzuleitung Z5 zur Ansteuerung der fünften Zeilenelektrode ZE5 ist im Bereich zwischen der vierten und fünften Spaltenelektrode SE4, SE5 angeordnet.

Gleichmäßig über das Sichtfeld 28 verteilt sind an einigen der Überkreuzungsbereiche von Trennungsbereichen 24 und Abstandsbereichen 20 Kleberpunkte 38 vorgesehen, die den Flüssigkristall 10 verdrängen und die beiden Abdeckscheiben 1 und 2 wie der Kleberand 12 miteinander verbinden. Die Kleberpunkte 38 sind vorzugsweise an solchen Überkreuzungsbereichen zwischen Trennungsbereich und Abstandsbereich angeordnet, an denen eine Zeilenzuleitung in der ersten Ebene 16 einen Verbindungsabschnitt 32 einer Zeilenelektrode in der zweiten Ebene 22 überkreuzt, die nicht angesteuert werden soll. Durch die räumliche Konstellation würde dieser kleine Überkreuzungsbereich jedoch bei entsprechenden Ansteuerungssignalen auch angesteuert. Durch das Vorsehen von Kleberpunkten 38 in diesen Bereichen wird das verhindert. Wie in Fig. 1 dargestellt ist vorzugsweise an allen Überkreuzungsbereichen zwischen den Trennungsbereichen 24 und den Abstandsbereichen 20 in denen Verbindungsabschnitte 32 vorhanden sind entweder ein Kleberpunkt 38 oder ein elektrischer Kontaktpunkt 36 angeordnet. Durch die gleichmäßig über das Sichtfeld 28 bzw. das LCD-Anzeigeelement verteilten Kleberpunkte 38 wird eine Flüssigkristallzelle mit konstantem Abstand der beiden Abdeckscheiben 1, 2 und damit mit einem Flüssigkristall 10 mit konstanter Dicke erreicht.

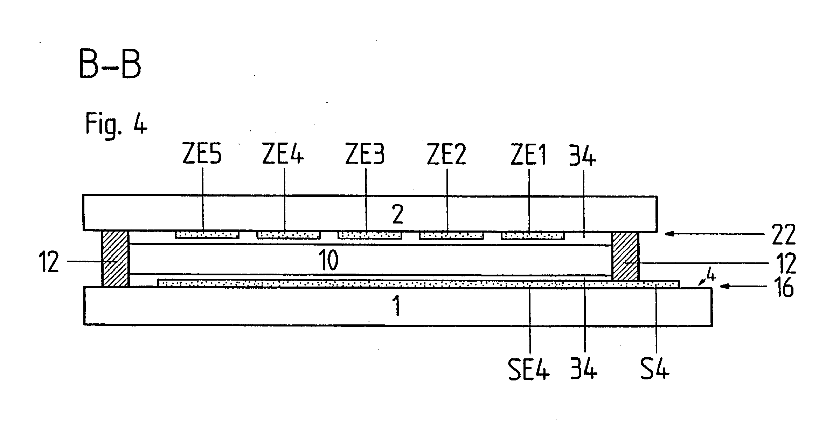

Wie vorstehend bereits erläutert, zeigt Fig. 3 eine Schnittdarstellung durch die Mitte des Abstandsbereichs 20 zwischen der zweiten und dritten Spaltenelektrode SE2, SE3 entlang der Linie A - A in Fig. 1. Fig. 4 zeigt eine Schnittdarstellung entlang der Mitte der vierten Spaltenelektrode SE4 und der zugehörigen vierten Zeilenzuleitung Z4 entlang der Linie B - B. Fig. 5 zeigt eine Schnittdarstellung entlang dem oberen Rand der dritten Zeilenelektrode ZE3 entlang der Linie C - C.

Die Darstellung der beispielhaften Ausführungsform der Erfindung in den Figuren 1 bis 5 ist lediglich schematisch und nicht maßstabsgetreu. Die Figuren 6 bis 8 zeigen beispielhaft maßstabsgetreue Ausgestaltungen von jeweils vier unmittelbar benachbarten Pixeln 26. Die Pixel 26 bzw. die Pixelabschnitte 30-i besitzen eine rechteckige Grundform mit abgeschnittenen bzw. gefasten Ecken. Durch die gefasten Ecken vergrößern sich die Überkreuzungsbereiche zwischen den Abstandsbereichen 20 und den Trennungsbereichen 24. Damit entsteht mehr Platz für die elektrischen Kontaktpunkte 36 und die Kleberpunkte 38. Die Trennungsbereiche 24 sind etwa 0,05 mm breit und damit viel dünner als die etwa 0,3 mm dicken Abstandsbereiche 20 in denen die Zeilenzuleitungen Z geführt sind. Die Breite der Zeilenzuleitungen Z beträgt etwa 0,1 mm. Die Verbindungsabschnitte 32-i weisen ebenfalls eine Breite von etwa 0,1 mm auf Der Durchmesser der Kleberpunkte 38 und der elektrischen Kontaktpunkte 36 beträgt etwa 0,35 mm. Die einzelnen Pixel 26 weisen eine Breite von etwa 1,8 mm und eine Höhe von etwa 2,1 mm auf.

Fig. 6a zeigt einen elektrischen Kontaktpunkt 36, der im Überkreuzungsbereich eines Abstandsbereichs 20 und eines Trennungsbereichs 24 oder zwischen vier Pixeln 26 bzw. vier Pixelabschnitten 30-1 bis 30-4. angeordnet ist. Fig. 6b zeigt den elektrischen Kontaktpunkt 36 in Vergrößerung. Fig. 6c zeigt einen Schnitt entlang der Linie A - A in Fig. 6b. Fig. 6d schließlich zeigt einen vergrößerten Abschnitt des Schnitts nach Fig. 6c. Die Situation in Fig. 6 entspricht dem elektrischen Kontaktpunkt 36 in Fig. 1, der die vierte Zeilenzuleitung Z4 mit der vierten Zeilenelektrode ZE4 verbindet. Die Pixelabschnitte 30-1 und 30-2 werden über einen Verbindungsabschnitt 32-1 miteinander verbunden und sind Teil der fünften Zeilenelektrode ZE5. Die Pixelabschnitte 30-3 und 30-4 werden über einen Verbindungsabschnitt 32-2 miteinander verbunden und sind Teil der vierten Zeilenelektrode ZE4, die kontaktiert werden soll. Entsprechend der schematischen Darstellung in Fig. 2 sind bei den Pixelabschnitten 30-i den Verbindungsabschnitten 32-1 und 32-2 diagonal gegenüberliegend Verbindungsabschnitte 32-3, 32-4, 32-5 und 32-6 in Fig. 6a eingezeichnet.

Wie bereits bei der Beschreibung der Fig. 1 bis 5 ausgeführt, sind die elektrischen Kontaktpunkte 36 nur in Richtung senkrecht zu der Elektrodenanordnung 14 elektrisch leitend. Dies wird durch eine bestimmte Anordnung und Ausgestaltung von elektrisch leitfähigen Partikeln 40 in den elektrischen Kontaktpunkten 36 erreicht. Der Abstand d - siehe Fig. 6d - der Innenseiten der beiden Abdeckscheiben 1, 2 beträgt etwa 5 bis 10 µm. Der Durchmesser eines elektrischen Kontaktpunktes 36 beträgt in Aufsicht etwa 0,35 mm - siehe Fig. 6b. Die leitfähigen Partikel 40, z. B. in Form von Goldkügelchen weisen einen mittleren Durchmesser auf, der etwas größer ist als der Zellgap d, d. h. der mittlere Durchmesser der leitfähigen Partikel 40 ist zwischen 10% und 20% größer als der Abstand d der beiden Abdeckscheiben 1, 2. Daher werden die leitfähigen Partikel 40 zwischen den beiden Abdeckscheiben 1, 2 eingeklemmt und gestaucht, so dass sich ein guter elektrischer Kontakt zu der vierten Zeilenelektrode ZE4 und der vierten Zeilenzuleitung Z4 ergibt. Wie aus Fig. 6b zu ersehen ist, ist die einlagige Schicht aus elektrisch leitfähigen Partikeln 40 statistisch so über die Querschnittsfläche der elektrischen Kontaktpunkte verteilt, dass sich ein mittlerer Abstand D zwischen den einzelnen Partikeln 40 ergibt, der wesentlich größer ist als ihr Durchmesser. Daher sind die elektrischen Kontaktpunkte 36 in Querrichtung bzw. in Richtung parallel zu den Abdeckscheiben 1, 2 bzw. parallel zu der ersten und zweiten Ebene 16, 22 nicht elektrische leitend. Die vierte Zeilenzuleitung Z4 endet genau unter dem Verbindungsabschnitt 32-2, so dass die über die gesamte Querschnittsfläche des elektrischen Kontaktpunkts 36 verteilten Goldkügelchen 40 nur einen elektrischen Kontakt zwischen dem Verbindungsabschnitt 32-2 und dem unmittelbar darunter angeordneten Ende der vierten Zeilenzuleitung Z4 herstellen.

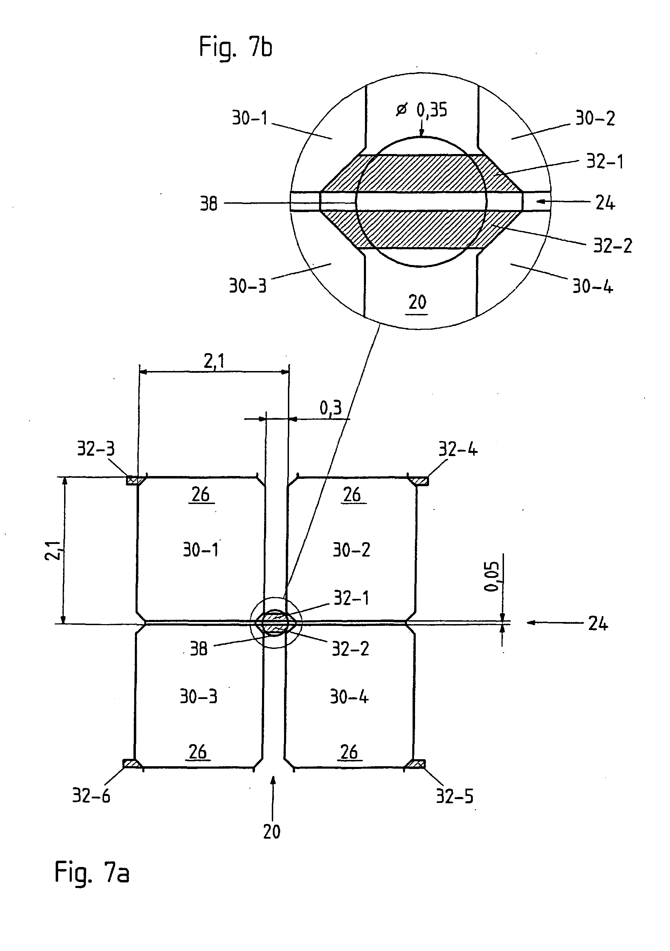

Fig. 7a und 7b zeigen in analoger Weise zu der Darstellung in den Figuren 6a bis 6d eine Kleberpunkt 38 zwischen vier Pixeln 26 bzw. zwischen den Pixelabschnitten 30-1 bis 30-4. Fig. 7a und 7b entsprechen der Darstellung des Kleberpunktes 38 in Fig. 1 zwischen der dritten und vierten Spaltenelektrode SE3, SE4 und der vierten und fünften Zeilenelektrode ZE4, ZE5 oder der dritten und vierten Zeilenelektrode ZE3, ZE4.

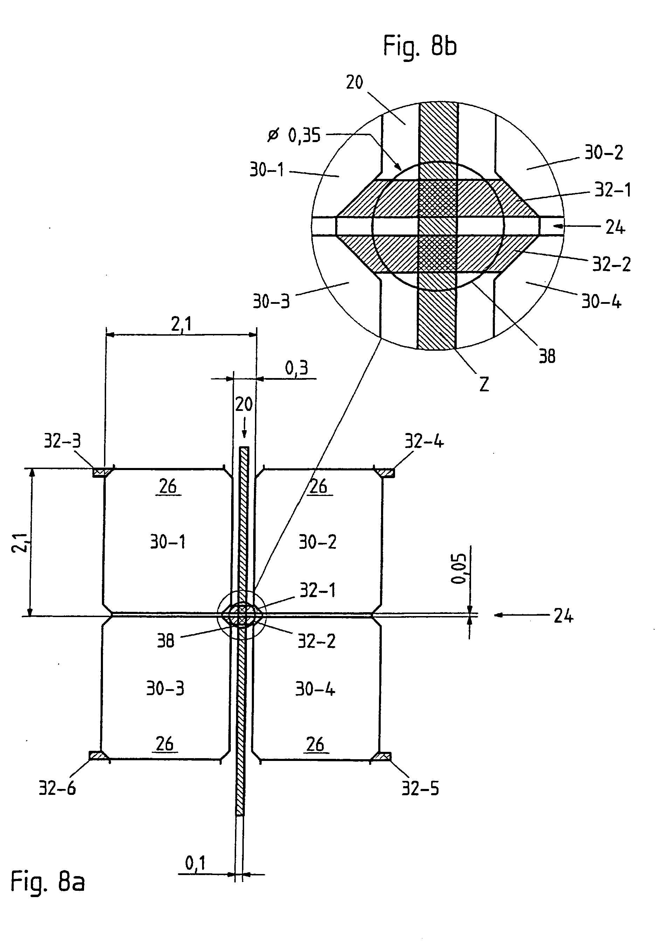

Fig. 8a und 8b zeigen einen Kleberpunkt 38 unter dem eine Zeilenzuleitung Z verläuft. Dies entspricht z. B. den Kleberpunkten 38 in Fig. 1 zwischen der ersten und der zweiten Spaltenelektrode SE1, SE2 und der zweiten und dritten Zeilenelektrode ZE2, ZE3 oder zwischen der vierten und fünften Spaltenelektrode SE4, SE5 und der dritten und vierten Zeilenelektrode ZE3, ZF4. In den Figuren 6 bis 8 sind auch beispielhafte Dimensionierungen für die einzelnen Pixel 26, die Zeilenzuleitungen Z, die Abstandsbereiche 20 und die Trennungsbereiche 24 angeben. Auch ist zu ersehen, dass die Pixel 26 bzw. die Pixelabschnitte 30-i eine rechteckige Grundform aufweisen, wobei die Ecken gefast sind. Die Trennungsbereiche 24 können dünner oder schmaler ausgebildet werden als die Abstandsbereiche 20, da in den Trennungsbereichen 24 zwischen den einzelnen Zeilenelektroden ZE keine Zuleitungen geführt werden. Die Breite der Verbindungsabschnitte 32 liegt im Bereich der Breite der Zeilenzuleitungen Z.

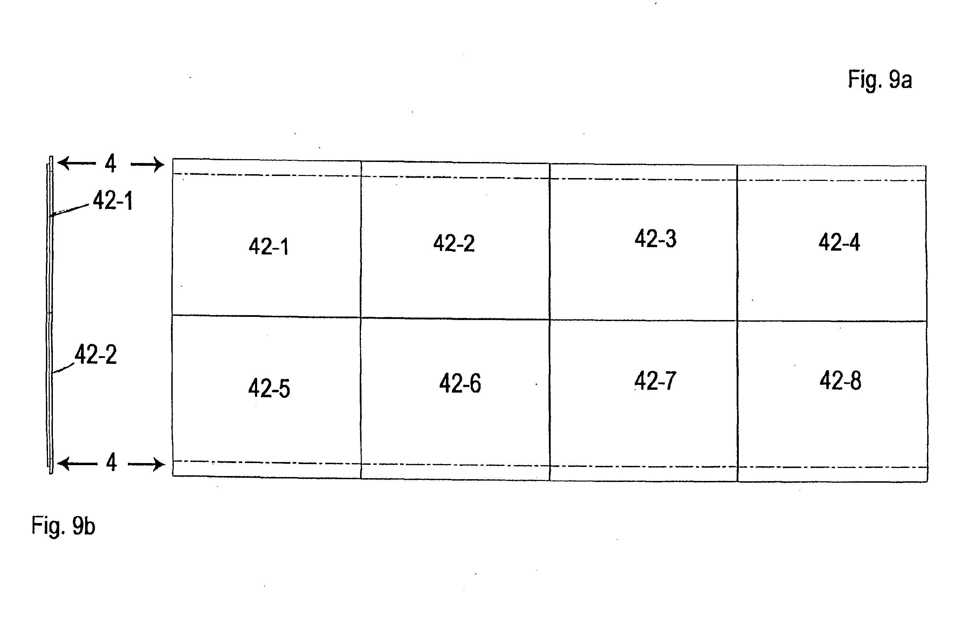

Fig. 9a und 9b zeigen eine beispielhafte Ausführungsform einer Anzeigetafel gemäß der vorliegenden Erfindung, die aus acht LCD-Anzeigeelementen 42-1 bis 42-8 zusammengesetzt ist. Fig. 9a stellt eine Aufsicht und Fig. 9b stellt eine Seitenansicht dar. Vier LCD-Anzeigelemente 42-1 bis 42-4 sind in einer Zeile nebeneinander auf Stoß angeordnet. Die vier anderen LCD-Anzeigeelemente 42-5 bis 42-8 sind um 180° gedreht in einer zweiten Zeile ebenfalls auf Stoß nebeneinander und auf Stoß zu den vier ersten LCD-Anzeigelementen 42-1 bis 42-4 angeordnet. Die Kontaktränder 4 der einzelnen LCD-Anzeigeelemente sind jeweils außen am oberen und unteren Rand der Anzeigetafel angeordnet. Durch die erfindungsgemäße Führung der Zeilenzuleitungen Z kann der optisch nicht aktive Rand im Bereich der linken, der oberen und der rechten Seitenkante 5, 6, 7 so dünn bzw schmal ausgeführt werden, dass er im Bereich der halben Breite eines Abstandsbereichs 20 liegt. Damit wird der Übergang zwischen zwei auf Stoß nebeneinander angeordneten LCD-Anzeigeelementen optisch nahezu unsichtbar.

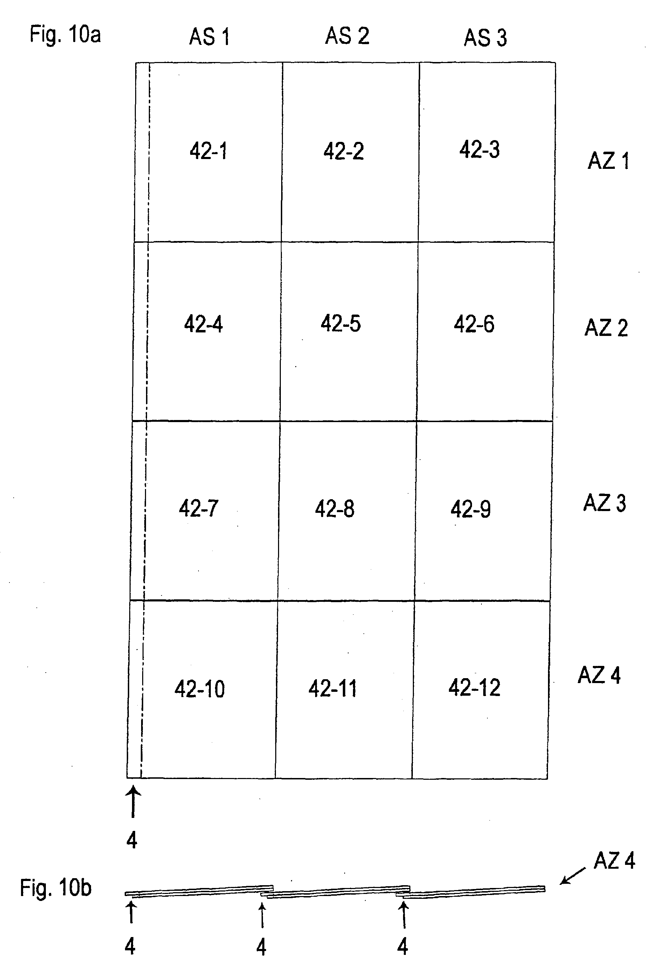

Fig. 10a und 10b zeigen eine alternative Ausgestaltung einer Anzeigetafel mit einer Matrixanordnung von einzelnen LCD-Anzeigeelementen 42-i mit vier Zeilen AZ und drei Spalten AS. Fig. 10a stellt eine Aufsicht und Fig. 10b stellt eine Seitenansicht dar. Hierbei sind die LCD-Elemente 42-i in einer Zeile nach Art von Schindeln im Bereich des Kontaktrandes 4 überlappend angeordnet. Die einzelnen Zeilen AZ sind auf Stoß nebeneinander angeordnet. Auf dieser Weise können nahezu beliebig große Anzeigetafeln bereit gestellt werden. Die Ausführungsform nach Fig. 10 ist insbesondere für reflektive LCD-Anzeigeelemente mit cholesterischem Flüssigkristall geeignet.

### Bezugszeichenliste:

ZE1 bis ZE5 Zeilenelektroden
SE1 bis SE5 Spaltenelektroden
Z1 bis Z5 Zeilenzuleitungen
S1 bis S5 Spaltenzuleitungen

- 1: erste Abdeckscheibe
- 2: zweite Abdeckscheibe
- 4: Kontaktrand
- 5: linke Seitenkante
- 6: rechte Seitenkante
- 7: obere Seitenkante
- 8: untere Seitenkante
- 10: Flüssigkristall
- 12: Kleberand
- 14: Elektrodenanordnung
- 16: erste Ebene
- 18: erstes Elektrodenende
- 19: zweites Elektrodenende
- 20: Abstandsbereiche
- 22: zweite Ebene
- 24: Trennungsbereiche
- 26: Pixel
- 28: Sichtfeld
- 30: Pixelabschnitte
- 32: Verbindungsabschnitte
- 34: LCD-Orientierungsschicht
- 36: elektrischer Kontaktpunkt
- 37: senkrechte Striche in 36
- 38: Kleberpunkte
- 40: leitfähige Partikel in 36
- 42-i: LCD-Anzeigelemente

- 100: LCD-Anzeigelement
- 101: linke Seitenkante von 100
- 102: rechte Seitenkante von 100
- 103: obere Seitenkante von 100
- 104: untere Seitenkante von 100
- 106: Kleberand
- 108: Elektrodenanordnung
- 110: Trennungsbereiche
- 112: Abstandsbereiche
- 114: Pixel
- 116: Sichtbereich
- 118: Kontaktstreifen

## Patentansprüche

1. LCD-Anzeigeelement, mit
- einer ersten und einer zweiten optisch durchlässigen Abdeckscheibe (1, 2), die über einen Kleberand (12) mit Abstand zueinander verbunden sind,
- einem zwischen den beiden Abdeckscheiben (1, 2) und dem Kleberand (12) angeordneten Flüssigkristall (10),
- einer in einem Sichtfeld (28) vorgesehenen Elektrodenanordnung (14) in Matrixform mit s Spaltenelektroden (SE), die in einer ersten Ebene (16) auf der Innenseite der ersten Abdeckscheibe (1) angeordnet sind, und z Zeilenelektroden (ZE), die in einer zweiten Ebene (22) auf der Innenseite der zweiten Abdeckscheibe (2) angeordnet sind,
-- wobei die z Zeilenelektroden (ZE) und die s Spaltenelektroden (SE) jeweils ein erstes und ein zweites Elektrodenende (18, 19) aufweisen,
-- wobei zwischen benachbarten Zeilenelektroden (ZE) Trennungsbereiche (24) und zwischen benachbarten Spaltenelektroden (SE) Abstandsbereiche (20) vorgesehen sind, und
-- wobei die Überkreuzungsbereiche zwischen Zeilen- und Spaltenelektroden (ZE, SE) einzelne Pixel (26) festlegen,
- z elektrischen Zeilenzuleitungen (Z) zur Ansteuerung jeweils einer der z Zeilenelektroden (ZE),
-- wobei die Zeilenzuleitungen (Z) an elektrischen Kontaktpunkten (36) elektrisch mit der jeweiligen Zeilenelektrode (ZE) verbunden sind,
- s elektrischen Spaltenzuleitungen (S) zur Ansteuerung jeweils einer der s Spaltenelektroden (SE),
-- wobei die Spaltenzuleitungen (S) die Spaltenelektroden (SE) an dem ersten Elektrodenende (18) kontaktieren,
-- wobei die Spaltenzuleitungen (S) in der ersten Ebene (16) auf der Innenseite der ersten Abdeckscheibe (1) angeordnet sind, und
- wobei die Zeilen- die Spaltenzuleitungen (Z, S) durch den Kleberand (12) nach außen geführt sind,
- wobei die z Zeilenzuleitungen (Z) in der ersten Ebene (16) auf der Innenseite der ersten Abdeckscheibe (1) angeordnet sind,
**dadurch gekennzeichnet,**
- **dass** wenigstens eine der z Zeilenzuleitungen (Z) zwischen zwei der s Spaltenelektroden (SE) geführt ist,
- **dass** die elektrischen Kontaktpunkte (36) zwischen Zeilenzuleitung (Zi) und zugehöriger Zeilenelektrode (ZEi) in den Abstandsbereichen (20) zwischen den Spaltenelektroden (SE) angeordnet sind und eine elektrische Verbindung zwischen der ersten und der zweiten Ebene (16, 22) herstellen,
- **dass** die einzelnen Zeilenelektroden (ZE) eine Mehrzahl von Pixelabschnitten (30) aufweisen, die die Überkreuzungsbereiche der Zeilenelektroden (ZE) mit den Spaltenelektroden (SE) bilden,
- **dass** jeweils unmittelbar benachbarte Pixelabschnitte (30) über Verbindungsabschnitte (32) elektrisch miteinander verbunden sind, und
- **dass** die Verbindungsabschnitte (32) schmaler als die Pixelabschnitte (30) sind.

2. LCD-Anzeigeelement nach Anspruch 1, **dadurch gekennzeichnet, dass** für z < s zwischen zwei benachbarten Spaltenelektroden (SE) höchstens eine der z Zeilenzuleitungen (Z) geführt ist.

3. LCD-Anzeigeelement nach Anspruch 1, **dadurch gekennzeichnet, dass** für z ≥ s zwischen allen benachbarten Spaltenelektroden (SE) wenigstens eine der z Zeilenzuleitungen (Z) geführt ist.

4. LCD-Anzeigeelement nach einem der vorhergehenden Ansprüche, **dadurch gekennzeichnet, dass** das LCD-Anzeigeelement wenigstens eine gerade LCD-Kante (5, 6, 7, 8) aufweist und dass die Zeilen- und die Spaltenzuleitungen (ZE, SE) an dieser geraden LCD-Kante (8) durch den Kleberand (12) geführt sind.

5. LCD-Anzeigeelement nach einem der vorhergehenden Ansprüche, **dadurch gekennzeichnet, dass** die Verbindungsabschnitte (32) die Pixelabschnitte (30) abwechselnd an deren oberen und unteren Rändern elektrisch miteinander verbinden.

6. LCD-Anzeigeelement nach einem der vorhergehenden Ansprüche, **dadurch gekennzeichnet, dass** die Breite der Verbindungsabschnitte (32) etwa 5% der Breite die Pixelabschnitte (30) beträgt.

7. LCD-Anzeigeelement nach einem der vorhergehenden Ansprüche, **dadurch gekennzeichnet, dass** die Breite der Verbindungsabschnitte (32) etwa 0,1 mm beträgt.

8. LCD-Anzeigeelement nach einem der vorhergehenden Ansprüche, **dadurch gekennzeichnet, dass** die einzelnen Pixel (26) polygonförmig und insbesondere rechteckig mit gefasten Ecken sind.

9. LCD-Anzeigeelement nach einem der vorhergehenden Ansprüche 1 bis 7, **dadurch gekennzeichnet, dass** die einzelnen Pixel (26) gerundet sind.

10. LCD-Anzeigeelement nach einem der vorhergehenden Ansprüche, **dadurch gekennzeichnet, dass** verteilt über das Sichtfeld (28) an Überkreuzungsbereichen der Abstandsbereiche (20) mit den Trennungsbereichen (24) Kleberpunkte (38) angeordnet sind, die die beiden Abdeckscheiben (1, 2) miteinander verbinden.

11. LCD-Anzeigeelement nach Anspruch 10, **dadurch gekennzeichnet, dass** die Kleberpunkte (38) die Zeilenelektroden (ZE) im Bereich der Abstandsbereiche (20) überdecken.

12. LCD-Anzeigeelement nach Anspruch 10 oder 11, **dadurch gekennzeichnet, dass** die Kleberpunkte (38) gleichmäßig über das Sichtfeld (28) verteilt sind.

13. LCD-Anzeigeelement nach einem der Ansprüche 10 bis 12, **dadurch gekennzeichnet, dass** die Kleberpunkte (38) aus demselben Material wie der Kleberand (12) bestehen.

14. LCD-Anzeigeelement nach einem der vorhergehenden Ansprüche, **dadurch gekennzeichnet, dass** die elektrischen Kontaktpunkte (36) gleichmäßig über das Sichtfeld (28) verteilt sind.

15. LCD-Anzeigeelement nach Anspruch 14, **dadurch gekennzeichnet, dass** die elektrischen Kontaktpunkte (36) aus dem gleichen Material wie der Kleberand (12) bestehen, das zusätzlich mit leitfähigen Partikeln (40) versetzt ist.

16. LCD-Anzeigeelement nach einem der vorhergehenden Ansprüche 1 bis 14, **dadurch gekennzeichnet,**
**dass** auf den Innenseiten der beiden Abdeckscheiben (1, 2) eine Flüssigkristall-Orientierungsschicht (34) vorgesehen ist, und
**dass** die elektrischen Kontaktpunkte (36) durch gezieltes Aufbringen von zusätzlichem Orientierungsschichtmaterial mit elektrisch leitfähigen Partikeln (40) auf die die Flüssigkristall-Orientierungsschicht (34) in bestimmten Bereichen bereitgestellt sind.

17. LCD-Anzeigeelement nach Anspruch 15 oder 16, **dadurch gekennzeichnet, dass** die leitfähigen Partikel (40) einen mittleren Durchmesser aufweisen, der zwischen 10% und 20% größer ist als der Abstand der beiden Abdeckscheiben (1, 2), und dass die einzelnen leitfähigen Partikel in einer Richtung parallel zu der ersten oder zweiten Ebene (16, 22) nicht durchgehend in Kontakt zueinander stehen.

18. LCD-Anzeigeelement nach einem der vorhergehenden Ansprüche 10 bis 16, **dadurch gekennzeichnet, dass** zwischen 50% und 100%, bevorzugt zwischen 70% und 100%, und insbesondere zwischen 90% und 100% der Überkreuzungsbereiche zwischen Abstands- und Trennungsbereichen (20, 24) mit Kleberpunkten (38) versehen sind.

19. LCD-Anzeigeelement nach einem der vorhergehenden Ansprüche, **dadurch gekennzeichnet, dass** der Flüssigkristall (10) ein cholesterischer Flüssigkristall (ChLCD) ist.

20. LCD-Anzeigeelement nach einem der vorhergehenden Ansprüche, **dadurch gekennzeichnet, dass** der Flüssigkristall (10) eine verdrillte Flüssigkristallstruktur aufweist und insbesondere ein TN- oder ein ETN-Flüssigkristall ist.

21. LCD-Anzeigetafel mit einer Mehrzahl von LCD-Anzeigeelementen (42-i) nach einem der vorhergehenden Ansprüche, wobei die LCD-Elemente (42-i) rechteckig sind, wobei die Zeilen- und Spaltenzuleitungen (Z, S) der einzelnen LCD-Elemente (42-i) an einer der vier Rechteckseiten (4, 8) durch den Kleberrand (12) geführt sind und wobei die einzelnen LCD-Elemente (42-i) an wenigstens einer der drei anderen Rechteckseiten (5, 6, 7) auf Stoß aneinander gefügt sind.

## Claims

1. An LCD display element, with
- a first and a second optically translucent cover plate (1, 2), which are connected to one another, spaced somewhat from one another, via an adhesive rim (12),
- a liquid crystal (10) positioned between the two cover plates (1, 2) and the adhesive rim (12),
- an electrode assembly (14) in matrix form with s column electrodes (SE), which are arranged within a first plane (16) on the interior side of the first cover plate (1), and z row electrodes (ZE), which are arranged within a second plane (22) on the interior side of the second cover plate (2), said assembly being provided within a viewing field (28),
-- wherein the z row electrodes (ZE) and the s column electrodes (SE) each have a first and a second electrode end (18, 19),
-- wherein separation areas (24) are provided between adjacent row electrodes (ZE), and spacing areas (20) are provided between adjacent column electrodes (SE), and
-- wherein the crossover areas between row and column electrodes (ZE, SE) define individual pixels (26),
- z electrical row leads (Z), each for activating one of the z row electrodes (ZE),
-- wherein the row leads (Z) are electrically connected to the respective row electrodes (ZE) at electrical contact points (36),
- s electrical column leads (S), each for activating one of the s column electrodes (SE),
-- wherein the column leads (S) contact the column electrodes (SE) at the first electrode end (18),
-- wherein the column leads (S) are arranged within the first plane (16) on the interior side of the first cover plate (1),
-- wherein the row and column leads (Z, S) are guided to the outside through the adhesive rim (12), and
-- wherein the z row leads (Z) are arranged within the first plane (16) on the interior side of the first cover plate (1), **characterized in that**
- at least one of the z row leads (Z) is routed between two of the s column electrodes (SE),
- the electrical contact points (36) are arranged between row lead (Zi) and the allocated row electrode (ZEi) in the spacing areas (20) between the column electrodes (SE), and produce an electrical connection between the first and second planes (16, 22),
- the individual row electrodes (ZE) consist of a plurality of pixel segments (30) that form the area in which the row electrodes (ZE) and the column electrodes (SE) cross over one another,
- directly adjacent pixel segments (30) are electrically connected to one another via connecting elements (32), and
- the connecting elements (32) are narrower than the pixel segments (30).

2. The LCD display element according to Claim 1, **characterized in that** if z < s, a maximum of one of the z row leads (Z) is routed between two adjacent column electrodes (SE).

3. The LCD display element according to Claim 1, **characterized in that** if z ≥ s, at least one of the z row leads (Z) is routed between all adjacent column electrodes (SE).

4. The LCD display element according to one of the preceding claims, **characterized in that**
- the LCD display element has at least one straight LCD edge (5, 6, 7, 8), and
- the row and column leads (ZE, SE) are guided through the adhesive rim (12) at this straight LCD edge (8).

5. The LCD display element according to one of the preceding claims, **characterized in that** the connecting elements (32) electrically connect the pixel segments (30) to one another alternately at their upper and lower edges.

6. The LCD display element according to one of the preceding claims, **characterized in that** the width of the connecting elements (32) is approximately 5% of the width of the pixel segments (30).

7. The LCD display element according to one of the preceding claims, **characterized in that** the width of the connecting elements (32) is approximately 0.1 mm.

8. The LCD display element according to one of the preceding claims, **characterized in that** the individual pixels (26) are polygonal and are especially rectangular with chamfered corners.

9. The LCD display element according to one of the preceding claims 1 through 7, **characterized in that** the individual pixels (26) are rounded.

10. The LCD display element according to one of the preceding claims, **characterized in that** adhesive points (38) that connect the two cover plates (1, 2) with one another are arranged distributed over the viewing field (28) at areas in which the spacing areas (20) and the separation areas (24) cross over one another.

11. The LCD display element according to Claim 10, **characterized in that** the adhesive points (38) cover the row electrodes (ZE) in the vicinity of the spacing areas (20).

12. The LCD display element according to Claim 10 or 11, **characterized in that** the adhesive points (38) are uniformly distributed over the viewing field (28).

13. The LCD display element according to one of Claims 10 through 12, **characterized in that t**he adhesive points (38) are made of the same material as the adhesive rim (12).

14. The LCD display element according to one of the preceding claims, **characterized in that** the electrical contact points (36) are uniformly distributed over the viewing field (28).

15. The LCD display element according to Claim 14, **characterized in that** the electrical contact points (36) are made of the same material as the adhesive rim (12), additionally laced with conductive particles (40).

16. The LCD display element according to one of the preceding claims 1 through 14,
**characterized in that**
- a liquid crystal alignment layer (34) is provided on the interior sides of the two cover plates (1, 2), and
- the electrical contact points (36) are created through a targeted application of the additional alignment layer material with electrically conductive particles (40) in certain areas on the liquid crystal alignment layer (34).

17. The LCD display element according to Claim 15 or 16, **characterized in that**
- the conductive particles (40) have an average diameter that is 10% to 20% greater than the distance between the two cover plates (1, 2), and
- the individual conductive particles are not constantly in contact with one another in a direction parallel to the first or second planes (16, 22).

18. The LCD display element according to one of the preceding claims 10 through 16, **characterized in that** between 50% and 100%, preferably between 70% and 100%, and especially between 90% and 100% of the crossover areas between the spacing areas and separation areas (20, 24) are equipped with adhesive points (38).

19. The LCD display element according to one of the preceding claims, **characterized in that** the liquid crystal (10) is a cholesteric liquid crystal (ChLCD).

20. The LCD display element according to one of the preceding claims, **characterized in that** the liquid crystal (10) has a twisted liquid crystal structure and is especially a TN or an ETN liquid crystal.

21. The LCD display panel having a plurality of LCD display elements (42-i), according to one of the preceding claims, wherein
- the LCD elements (42-i) are rectangular,
- the row and column leads (Z, S) of the individual LCD elements (42-i) are routed through the adhesive rim (12) on one of the four sides of the rectangle (4, 8), and
- the individual LCD elements (42-i) are joined, flush against one another, on at least one of the three other sides of the rectangle (5, 6, 7).

## Revendications

1. Elément d'affichage à cristaux liquides (LCD), comprenant :
- une première et une deuxième dalle de recouvrement optiquement transparentes (1, 2) qui sont reliées ensemble à distance par l'intermédiaire d'un bord adhésif (12),
- un cristal liquide (10) disposé entre les deux dalles de recouvrement (1, 2) et le bord adhésif (12),
- un ensemble d'électrodes (14) prévu dans un champ de vision (28), sous forme de matrice avec s électrodes de colonne (SE) qui sont disposées dans un premier plan (16) sur la face intérieure de la première dalle de recouvrement (1), et z électrodes de rangée (ZE) qui sont disposées dans un deuxième plan (22) sur la face intérieure de la deuxième dalle de recouvrement (2),
- - dans lequel les z électrodes de rangée (ZE) et les s électrodes de colonne (SE) présentent respectivement une première et une deuxième extrémité d'électrode (18, 19),
- - dans lequel, des zones de séparation (24) sont prévues entre des électrodes de rangée (ZE) adjacentes, et des zones d'écartement (20) sont prévues entre des électrodes de colonne (SE) adjacentes , et
- - dans lequel les zones d'intersection entre les électrodes de rangée et de colonne (ZE, SE) définissent des pixels individuels (26),
- z lignes d'alimentation électrique (Z) pour exciter respectivement l'une des z électrodes de rangée (ZE),
-- dans lequel les lignes d'alimentation de rangée (Z) sont reliées électriquement au niveau de points de contact électrique (36) à l'électrode de rangée (ZE) respective,
- s lignes d'alimentation électrique de colonne (S) pour exciter respectivement l'une des électrodes de colonne (SE),
-- dans lequel les lignes d'alimentation de colonne (S) entrent en contact avec les électrodes de colonne (SE) au niveau de la première extrémité d'électrode (18),
-- dans lequel les lignes d'alimentation de colonne (S) sont disposées dans le premier plan (16) sur la face intérieure de la première dalle de recouvrement (1), et
- dans lequel les lignes d'alimentation de rangée et de colonne (Z, S) sont amenées vers l'extérieur à travers le bord adhésif (12),
- dans lequel les z lignes d'alimentation de rangée (Z) sont disposées dans le premier plan (16) sur la face intérieure de la première dalle de recouvrement (1),
**caractérisé en ce que**
- au moins l'une des z lignes d'alimentation de rangée (Z) est amenée entre deux des s électrodes de colonne (SE),
- les points de contact électrique (36), entre la ligne d'alimentation de rangée (Zi) et l'électrode de rangée associée (ZEi), sont disposés dans les zones d'écartement (20) entre les électrodes de colonne (SE) et établissent une connexion électrique entre le premier et le deuxième plan (16, 22),
- les électrodes de rangée individuelles (ZE) présentent une pluralité de portions de pixel (30) qui constituent les zones d'intersection des électrodes de rangée (ZE) avec les électrodes de colonne (SE),
- des portions de pixel (30) directement adjacentes sont respectivement reliées ensemble électriquement par des portions de connexion (32), et
- les portions de connexion (32) sont plus étroites que les portions de pixel (30).

2. Elément d'affichage LCD selon la revendication 1, **caractérisé en ce que** pour z < s entre deux électrodes de colonne (SE) adjacentes, au maximum l'une des z lignes d'alimentation de rangée (Z) est amenée.

3. Elément d'affichage LCD selon la revendication 1, **caractérisé en ce que** pour z ≥ s entre toutes les électrodes de colonne (SE) adjacentes, au moins l'une des z lignes d'alimentation de rangée (Z) est amenée.

4. Elément d'affichage LCD selon l'une quelconque des revendications précédentes, **caractérisé en ce que** l'élément d'affichage LCD présente au moins un rebord de LCD droit (5, 6, 7, 8) et **en ce que** les lignes d'alimentation de rangée et de colonne (ZE, SE) sont amenées le long de ce rebord LCD droit (8) à travers le bord adhésif (12).

5. Elément d'affichage LCD selon l'une quelconque des revendications précédentes, **caractérisé en ce que** les portions de connexion (32) relient les portions de pixel (30) ensemble électriquement, en alternance au niveau de leurs bords supérieurs et inférieurs.

6. Elément d'affichage LCD selon l'une quelconque des revendications précédentes, **caractérisé en ce que** la largeur des portions de connexion (32) mesure environ 5 % de la largeur des portions de pixel (30).

7. Elément d'affichage LCD selon l'une quelconque des revendications précédentes, **caractérisé en ce que** la largeur des portions de connexion (32) mesure environ 0,1 mm.

8. Elément d'affichage LCD selon l'une quelconque des revendications précédentes, **caractérisé en ce que** les pixels individuels (26) sont polygonaux et en particulier rectangulaires à coins chanfreinés.

9. Elément d'affichage LCD selon l'une quelconque des revendications 1 à 7, **caractérisé en ce que** les pixels individuels (26) sont arrondis.

10. Elément d'affichage LCD selon l'une quelconque des revendications précédentes, **caractérisé en ce que** des points de colle (38) sont disposés de façon répartie sur le champ de vision (28), au niveau des zones d'intersection des zones d'écartement (20) avec les zones de séparation (24), les points de colle reliant les deux dalles de recouvrement (1, 2) entre elles.

11. Elément d'affichage LCD selon la revendication 10, **caractérisé en ce que** les points de colle (38) recouvrent les électrodes de rangée (ZE) au niveau des zones d'écartement (20).

12. Elément d'affichage LCD selon la revendication 10 ou 11, **caractérisé en ce que** les points de colle (38) sont répartis uniformément sur le champ de vision (28).

13. Elément d'affichage LCD selon l'une quelconque des revendications 10 à 12, **caractérisé en ce que** les points de colle (38) sont composés du même matériau que le bord adhésif (12).

14. Elément d'affichage LCD selon l'une quelconque des revendications précédentes, **caractérisé en ce que** les points de contact électrique (36) sont répartis uniformément sur le champ de vision (28).

15. Elément d'affichage LCD selon la revendication 14, **caractérisé en ce que** les points de contact électrique (36) sont composés du même matériau que le bord adhésif (12), ledit matériau contenant de plus des particules conductrices (40).

16. Elément d'affichage LCD selon l'une quelconque des revendications 1 à 14, **caractérisé en ce qu'**une couche d'orientation de cristal liquide (34) est prévue sur les faces intérieures des deux dalles de recouvrement (1, 2), et **en ce que** les points de contact électrique (36) sont fournis dans certaines zones par une application ciblée d'un matériau de couche d'orientation supplémentaire avec des particules électriquement conductrices (40) sur la couche d'orientation de cristal liquide (34).

17. Elément d'affichage LCD selon la revendication 15 ou 16, **caractérisé en ce que** les particules conductrices (40) présentent un diamètre moyen qui est supérieur de 10 % à 20 % à l'écartement des deux dalles de recouvrement (1, 2), et **en ce que** les particules conductrices individuelles ne se trouvent pas en contact mutuel continu dans une direction parallèle au premier ou au deuxième plan (16, 22).

18. Elément d'affichage LCD selon l'une quelconque des revendications 10 à 16, **caractérisé en ce que** de 50 % à 100 %, de préférence de 70 % à 100 %, et en particulier de 90 % et 100 % des zones d'intersection entre les zones d'écartement et de séparation (20, 24) sont munis de points de colle (38).

19. Elément d'affichage LCD selon l'une quelconque des revendications précédentes, **caractérisé en ce que** le cristal liquide (10) est un cristal liquide cholestérique (ChLCD).

20. Elément d'affichage LCD selon l'une quelconque des revendications précédentes, **caractérisé en ce que** le cristal liquide (10) présente une structure de cristal liquide torsadée et est en particulier un cristal liquide TN ou ETN.

21. Panneau d'affichage LCD, comprenant une pluralité d'éléments d'affichage LCD (42-i) selon l'une quelconque des revendications précédentes, dans lequel les éléments LCD (42-i) sont rectangulaires, dans lequel les lignes d'alimentation de rangée et de colonne (Z, S) des éléments LCD individuels (42-i) sont amenées sur l'un des quatre côtés de rectangle (4, 8) à travers le bord adhésif (12), et dans lequel les éléments LCD individuels (42-i) sont assemblés bord à bord au moins sur l'un des trois autres côtés de rectangle (5, 6, 7).
